# DEMANDE DE BREVET EUROPEEN

(11) **EP 0 659 345 A1**
(43) Date de publication de la demande: **28.06.1995**
(21) Numéro de dépôt: 94480180.2
(22) Date de dépôt: 23.12.1994
(51) Int. Cl.: A22C 21/00

(54) **Procédé pour découper une volaille tel qu'un canard**

(30) Priorité: 24.12.1993 FR 9315848
(71) Demandeur: Lafitte, Alain, F-40500 Montaut (FR)
(72) Inventeur: Lafitte, Alain, F-40500 Montaut (FR)
(74) Mandataire: Hammond, William

(57) **Abrégé**

Procédé pour découper une volaille, tel qu'un canard, selon lequel on dispose la volaille sur son dos :
- on retire les ailerons,
- on découpe les chairs au niveau du bréchet et on décolle les cuisses,
- on extrait le foie et les viscères,
   puis, on dispose cette volaille sur son ventre et,
- on découpe les cuisses et le croupion au niveau des vertèbres lombaires,
- on entaille le cou et le long de la colonne vertébrale, et on coupe les côtes, de façon à retirer l'ensemble constitué par le cou et la colonne vertébrale,
- on désosse les manchons jusqu'à la jointure des os,
- on enlève les poumons en raclant les petites côtes, et
- on fait maturer au froid positif l'ensemble restant après l'avoir mis dans un filet.

Application en industrie agro-alimentaire.

## Description

La présente invention concerne un procédé pour découper une volaille, tel qu'un canard, afin d'obtenir des pièces anatomiques permettant de fabriquer un nouveau produit alimentaire.

Traditionnellement, on désolidarise d'abord du corps de l'animal les ailerons que l'on découpe ainsi que le cou ; puis, on entaille l'abdomen du côté du bréchet et on décolle le magret des aiguillettes. Ensuite, on décolle le paleton ou manteau et on désarticule les cuisses de l'animal. Enfin, on découpe l'aiguillette et on enlève le foie.

On obtient ainsi, d'une part, deux magrets, deux manchons, deux cuisses, l'aiguillette et, le foie et d'autre part, la carcasse et les viscères.

Comme on pourra le remarquer, I'éviscération est pratiquée en fin de découpage, ce qui n'est guère hygiénique. De plus, les pièces anatomiques obtenues comme par exemple les magrets, étant désolidarisées de la carcasse ne peuvent, lors de leur cuisson, s'imprégner de la saveur particulière qui se dégage des os de la carcasse.

Cette découpe de l'art antérieur est plus proche d'une dissection où l'on isole chaque pièce anatomique, que d'un procédé pour obtenir des morceaux présentant des qualités gustatives certaines et ayant une présentation attractive.

Aussi un des buts de la présente invention est-il de fournir un procédé pour découper une volaille, tel qu'un canard, qui permet d'obtenir des morceaux présentant après cuisson des qualités gustatives inconnues des produits traditionnels.

Un autre but de l'invention est de proposer un tel procédé qui permet l'obtention de nouveaux produits, diversifiant ainsi le choix offert aux consommateurs.

Ces buts, ainsi que d'autres qui apparaîtront par la suite, sont atteints par un procédé pour découper une volaille, tel qu'un canard, caractérisé selon la présente invention, par le fait que la volaille étant sur le dos :
- on retire les ailerons,
- on découpe les chairs au niveau du bréchet et on décolle les cuisses,
- on extrait le foie et les viscères, puis on dispose ladite volaille sur son ventre, et,
- on découpe les cuisses et le croupion au niveau des vertèbres lombaires,
- on entaille le cou et le long de la colonne vertébrale, et on coupe les côtes, de façon à retirer l'ensemble constitué par le cou et la colonne vertébrale,
- on désosse les manchons jusqu'à la jointure de l'os,
- on enlève les poumons en raclant les petites côtes, et
- on fait maturer au froid positif l'ensemble restant après l'avoir mis dans un filet.

De préférence, on découpe l'ensemble maturé en tranche, par exemple en six tranches.

Ce procédé de découpe permet de tirer le meilleur profit de la carcasse du canard gras. L'ensemble, qui est mis en filet, comprend notamment les chairs les plus nobles de ce type d'animal : le magret et l'aiguillette. Mais en plus, il comprend l'os de la carcasse dont le suc au moment de la cuisson donne une saveur fort appréciée à la chair.

Ainsi qu'on aura pu le comprendre, le procédé de découpe selon l'invention est une découpe transversale qui se situe au niveau du muscle pectoral, c'est-à-dire du magret.

Afin de rendre ce produit nouveau encore plus succulent, on dispose le foie de l'animal ou une farce en son centre.

## Revendications

1. Procédé pour découper une volaille, tel qu'un canard, caractérisé par le fait que l'on dispose ladite volaille sur son dos :
- on retire les ailerons,
- on découpe les chairs au niveau du bréchet et on décolle les cuisses,
- on extrait le foie et les viscères, puis, on dispose ladite volaille sur son ventre et,
- on découpe les cuisses et le croupion au niveau des vertèbres lombaires,
- on entaille le cou et le long de la colonne vertébrale, et on coupe les côtes, de façon à retirer l'ensemble constitué par le cou et la colonne vertébrale,
- on désosse les manchons jusqu'à la jointure des os,
- on enlève les poumons en raclant les petites côtes, et
- on fait maturer au froid positif l'ensemble restant après l'avoir mis dans un filet.

2. Procédé selon la revendication 1, caractérisé par le fait que l'ensemble maturé est découpé en tranches.
